# EUROPEAN PATENT APPLICATION

(11) **EP 4 660 007 A1**
(43) Date of publication of application: **10.12.2025**
(21) Application number: 24199409.4
(22) Date of filing: 10.09.2024
(51) Int. Cl.: B60N 2/75, B60N 2/02

(54) **DOOR ARMREST FOR VEHICLE**

(30) Priority: 04.06.2024 KR 20240073269
(71) Applicant: Hyundai Mobis Co., Ltd., Gangnam-gu Seoul 06141 (KR)
(72) Inventor: KIM, Jang Ho, 16891 Yongin-si, Gyeonggi-do (KR)
(74) Representative: Jung, Minkyu

(57) **Abstract**

The present invention relates to an armrest mountable on a door for a vehicle, the armrest including a first armrest part (110) mountable on an inner surface of a door (20) for a vehicle, and a second armrest part (120) configured to be selectively movable from a first position at which the second armrest part is deployed in a longitudinal direction of the first armrest part (110) to a second position at which the second armrest part (120) is folded with respect to the first armrest part (110), thereby obtaining an advantageous effect of improving convenience and safety of an occupant getting in or out of the vehicle and minimizing damage to the vehicle.

## Description

### CROSS-REFERENCE TO RELATED APPLICATION

This application claims priority to and the benefit of Korean Patent Application No. 10-2024-0073269 filed in the Korean Intellectual Property Office on June 4, 2024, the entire contents of which are incorporated herein by reference.

### TECHNICAL FIELD

The present disclosure relates to a door armrest for a vehicle, and more particularly, to a door armrest for a vehicle, which is capable of improving the convenience and safety of an occupant getting in or out of a vehicle and minimizing damage to the vehicle.

### BACKGROUND ART

In general, a door armrest is provided on an inner surface of a door of a vehicle, and the door armrest serves to support an occupant's arm or accommodate an object.

However, in the related art, the door armrest is always provided to protrude from the inner surface of the door regardless of a situation in which the occupant gets in or out of the vehicle, which makes it difficult to ensure a space for allowing the occupant to get in or out of the vehicle due to the thickness of the door armrest. For this reason, there is a problem that causes inconvenience to the occupant getting in or out of the vehicle, and causes a door ding (dooring) or the like to another neighboring vehicle (or structure).

In particular, a door of a vehicle parked in a narrow parking space is inevitably opened at a relatively small opening angle, which makes it difficult to ensure a sufficient space for allowing the occupant to get in or out of the vehicle (an interval between the vehicle and the opened door) between the vehicle and the opened door because of interference caused by the door armrest protruding from the inner surface of the door. For this reason, it is inconvenient for the occupant to get in or out of the vehicle because the occupant needs to get in or out of the vehicle in an uncomfortable posture in which the occupant forcibly twists his/her body.

Therefore, recently, various studies have been conducted to improve the convenience and safety of the occupant getting in or out of the vehicle and to minimize damage to the vehicle, but the study results are still insufficient. Accordingly, there is a need to develop a technology to improve the convenience and safety of the occupant getting in or out of the vehicle and to minimize damage to the vehicle.

### SUMMARY

The present disclosure has been made in an effort to provide a door armrest for a vehicle, which is capable of improving convenience and safety of an occupant getting in or out of a vehicle and minimizing damage to the vehicle.

In particular, the present disclosure has been made in an effort to ensure a sufficient space for allowing an occupant to get in or out of a vehicle parked in a narrow parking space, and improve convenience and safety of the occupant getting in or out of the vehicle.

The present disclosure has also been made in an effort to provide a door armrest for a vehicle, which is capable of sufficiently performing a natural function of the door armrest and improving structural stability and reliability.

The present disclosure has also been made in an effort to ensure convenience and safety of an occupant getting in or out of a vehicle and to minimize deterioration in design features and merchandise value.

The objects to be achieved by the embodiments are not limited to the above-mentioned objects, but also include objects or effects that may be understood from the solutions or embodiments described below.

In order to achieve the above-mentioned objects, an exemplary embodiment of the present disclosure provides a door armrest for a vehicle, the door armrest including: a first armrest part provided on an inner surface of a door for a vehicle; and a second armrest part configured to be selectively movable from a first position at which the second armrest part is deployed in a longitudinal direction of the first armrest part to a second position at which the second armrest part is folded with respect to the first armrest part.

This is to improve convenience and safety of an occupant getting in or out of a vehicle and minimize damage to the vehicle.

That is, in the related art, the door armrest is always provided to protrude from the inner surface of the door regardless of a situation in which the occupant gets in or out of the vehicle, which makes it difficult to ensure a space for allowing the occupant to get in or out of the vehicle due to the thickness of the door armrest. For this reason, there is a problem that causes inconvenience to the occupant getting in or out of the vehicle, and causes a door ding (dooring) or the like to another neighboring vehicle (or structure).

In particular, a door of a vehicle parked in a narrow parking space is inevitably opened at a relatively small opening angle, which makes it difficult to ensure a sufficient space for allowing the occupant to get in or out of the vehicle (an interval between the vehicle and the opened door) between the vehicle and the opened door because of interference caused by the door armrest protruding from the inner surface of the door. For this reason, it is inconvenient for the occupant to get in or out of the vehicle because the occupant needs to get in or out of the vehicle in an uncomfortable posture in which the occupant forcibly twists his/her body.

In contrast, in the embodiment of the present disclosure, the second armrest part moves from the first position at which the second armrest part is deployed in the longitudinal direction of the first armrest part to the second position at which the second armrest part is folded with respect to the first armrest part. Therefore, it is possible to obtain an advantageous effect of improving convenience and safety of the occupant getting in or out of the vehicle and minimizing damage to the vehicle.

Among other things, in the embodiment of the present disclosure, in a situation in which the door is inevitably opened at a small opening angle because the vehicle is parked in a narrow parking space, the second armrest part moves to the second position at which the second armrest part is folded with respect to the first armrest part, such that a sufficient space (an interval between the vehicle and the opened door), through which the occupant gets in or out of the vehicle, may be ensured between the vehicle and the opened door. Therefore, it is possible to obtain an advantageous effect of improving convenience and safety of the occupant getting in or out of the vehicle and minimizing damage, such as a door ding (dooring), to another neighboring vehicle (or structure).

In one embodiment of the present disclosure, there is a door armrest for a vehicle, the door armrest including a first armrest part provided on an inner surface of a door for a vehicle and a second armrest part movable between a first position to a second position is defined as including both a configuration in which the second armrest part rotates from the first position to the second position and a configuration in which the second armrest part moves along a curved line from the first position to the second position.

According to the exemplary embodiment of the present disclosure, the second armrest part may be rotatable between the first position to the second position.

According to the exemplary embodiment of the present disclosure, the door armrest for a vehicle may include: a rotary shaft provided at one end of the second armrest part adjacent to the first armrest part and coupled to the second armrest part such that the second armrest part is rotatable relative to the door between the first position and the second position.

The first and second positions of the second armrest part may be variously defined in accordance with required conditions and design specifications.

According to the exemplary embodiment of the present disclosure, in the first position the second armrest part may be disposed in a horizontal direction and, in the second position the second armrest part may be disposed in a vertical direction so as to be substantially orthogonal to the first armrest part.

The movement of the second armrest part relative to the first armrest part may be implemented in various ways in accordance with required conditions and design specifications.

According to the exemplary embodiment of the present disclosure, the door armrest for a vehicle may include a link assembly connecting the first armrest part and the second armrest part so that the second armrest part is selectively rotatable relative to the first armrest part.

The link assembly may have various structures capable of connecting the second armrest part to the first armrest part so that the second armrest part is rotatable relative to the first armrest part.

According to the exemplary embodiment of the present disclosure, the link assembly may include: a first rotary link member provided on the first armrest part and rotatably connected to the first armrest part at one end thereof; a second rotary link member rotatably connected to the other end of the first rotary link member; a slide link member provided on the first armrest part and slidable in the longitudinal direction of the first armrest part, the second rotary link member being rotatably connected to the slide link member; and a third rotary link member having one end rotatably connected to the slide link member, and the other end rotatably connected to the second armrest part.

According to the exemplary embodiment of the present disclosure, the door armrest for a vehicle may include a slide guide provided on the first armrest part and supporting the slide link member such that the slide link member is slidable.

As described above, in the embodiment of the present disclosure, the slide link member slides along the slide guide. Therefore, it is possible to obtain an advantageous effect of minimizing an erroneous operation and withdrawal of the slide link member and improving stability and reliability.

According to the exemplary embodiment of the present disclosure, the door armrest for a vehicle may include a drive part connected to one end of the first rotary link member and configured to provide driving power for rotating the first rotary link member.

According to the exemplary embodiment of the present disclosure, when the second armrest part moves to the first position, the first rotary link member and the second rotary link member may be disposed in a row in the longitudinal direction of the slide link member.

As described above, in the embodiment of the present disclosure, the first rotary link member and the second rotary link member are disposed in a row in the longitudinal direction of the slide link member when the second armrest part moves to the first position. Therefore, it is possible to obtain an advantageous effect of minimizing a degree to which the second armrest part is inadvertently rotated by pressure applied to the second armrest part (e.g., a load applied by the occupant's arm) in the state in which the second armrest part is disposed at the first position.

According to the exemplary embodiment of the present disclosure, the handle part and a bottom surface of the first armrest part may be offset from one another and define a sliding space therebetween within which the slide link member is positioned.

As described above, in the embodiment of the present disclosure, the sliding space is provided between the handle part and the bottom surface of the first armrest part, and the slide link member slides along the sliding space. Therefore, it is possible to obtain an advantageous effect of more stably maintaining an arrangement state of the slide link member and preventing interference (contact) between the handle part and the link assembly.

According to the exemplary embodiment of the present disclosure, a base link portion may be disposed in the longitudinal direction of the slide link member when the second armrest part moves to the second position.

As described above, in the embodiment of the present disclosure, the base link portion is disposed in the longitudinal direction of the slide link member when the second armrest part moves to the second position. Therefore, it is possible to obtain an advantageous effect of minimizing a degree to which the second armrest part is inadvertently rotated by pressure applied to the second armrest part (e.g., pressure applied by contact of the occupant) in the state in which the second armrest part is disposed at the second position.

According to the exemplary embodiment of the present disclosure, the door armrest for a vehicle may include: the handle part provided on the first armrest part.

According to the exemplary embodiment of the present disclosure, the second armrest part may include: an upper cover defining an upper surface and a lateral surface of the second armrest part; a lower cover defining a bottom surface of the second armrest part; and a through-portion provided at one end of the lower cover adjacent to the first armrest part and defining a through-space that allows a rotation of the third rotary link member relative to the second armrest part.

The second armrest part may be variously changed in size in accordance with required conditions and design specifications. According to the exemplary embodiment of the present disclosure, the second armrest part may have a length of 400 mm or more.

According to the exemplary embodiment of the present disclosure, the door armrest for a vehicle may include: an extension cover provided at an end of the first armrest part adjacent to the second armrest part and covering the through-portion when the second armrest part moves to the first position.

This is based on the fact that the through-portion is provided in the lower portion of the second armrest part to allow the rotation of the third rotary link member relative to the second armrest part, such that foreign substances such as dust may be introduced into the second armrest part through the through-portion, and the internal components of the second armrest part are exposed to the outside in an intact manner, which may degrade the design properties.

In contrast, in the embodiment of the present disclosure, the extension cover is provided at the end of the first armrest part adjacent to the second armrest part, and the extension cover covers the through-portion when the second armrest part moves to the first position. Therefore, it is possible to obtain an advantageous effect of minimizing a degree to which foreign substances, such as dust, are introduced into the second armrest part through the through-portion and preventing the internal components of the second armrest part from being exposed to the outside in an intact manner.

### BRIEF DESCRIPTION OF THE DRAWINGS

FIG. 1 is a view for explaining a door armrest for a vehicle according to an embodiment of the present disclosure.
FIG. 2 is a view for explaining a state in which a second armrest part of the door armrest for a vehicle according to the embodiment of the present disclosure is disposed at a second position.
FIGS. 3 and 4 are views for explaining a space through which an occupant gets in or out of a vehicle when a door is opened and the space is made by the door armrest for a vehicle according to the embodiment of the present disclosure.
FIGS. 5 to 8 are views for explaining an operational structure of a link assembly of the door armrest for a vehicle according to the embodiment of the present disclosure.
FIG. 9 is a view for explaining an extension cover of the door armrest for a vehicle according to the embodiment of the present disclosure.

### DETAILED DESCRIPTION

Hereinafter, exemplary embodiments of the present disclosure will be described in detail with reference to the accompanying drawings.

However, the technical spirit of the present disclosure is not limited to some embodiments described herein but may be implemented in various different forms. One or more of the constituent elements in the embodiments may be selectively combined and substituted for use within the scope of the technical spirit of the present disclosure.

In addition, unless otherwise specifically and explicitly defined and stated, the terms (including technical and scientific terms) used in the embodiments of the present disclosure may be construed as the meaning which may be commonly understood by the person with ordinary skill in the art to which the present disclosure pertains. The meanings of the commonly used terms such as the terms defined in dictionaries may be interpreted in consideration of the contextual meanings of the related technology.

In addition, the terms used in the embodiments of the present disclosure are for explaining the embodiments, not for limiting the present disclosure.

In the present specification, unless particularly stated otherwise, a singular form may also include a plural form. The expression "at least one (or one or more) of A, B, and C" may include one or more of all combinations that can be made by combining A, B, and C.

In addition, the terms such as first, second, A, B, (a), and (b) may be used to describe constituent elements of the embodiments of the present disclosure.

These terms are used only for the purpose of discriminating one constituent element from another constituent element, and the nature, the sequences, or the orders of the constituent elements are not limited by the terms.

Further, when one constituent element is described as being 'connected', 'coupled', or 'attached' to another constituent element, one constituent element may be connected, coupled, or attached directly to another constituent element or connected, coupled, or attached to another constituent element through still another constituent element interposed therebetween.

In addition, the expression "one constituent element is provided or disposed above (on) or below (under) another constituent element" includes not only a case in which the two constituent elements are in direct contact with each other, but also a case in which one or more other constituent elements are provided or disposed between the two constituent elements. The expression "above (on) or below (under)" may mean a downward direction as well as an upward direction based on one constituent element.

Furthermore, the expression "substantially orthogonal" may refer to two or more surfaces lying on imaginary planes that intersect at a right angle, as will be appreciated by those of skill in the art, and allows for approximations, inaccuracies, and limits of measurement under the relevant circumstances. In one or more aspects, the terms "substantially," "about," "generally, and "approximately" may provide an industry-accepted tolerance for their corresponding terms and/or relativity between items, such as a tolerance of ± 1%, :f: 5%, or ± 10% of the actual value stated, and other suitable tolerances.

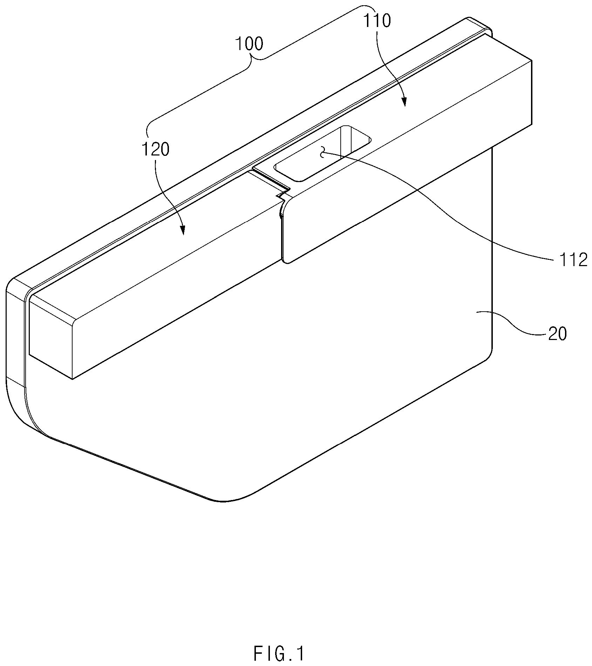

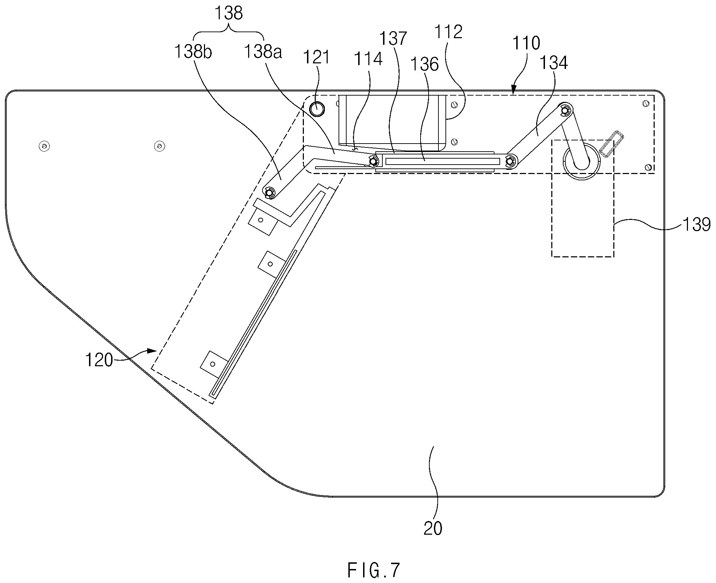

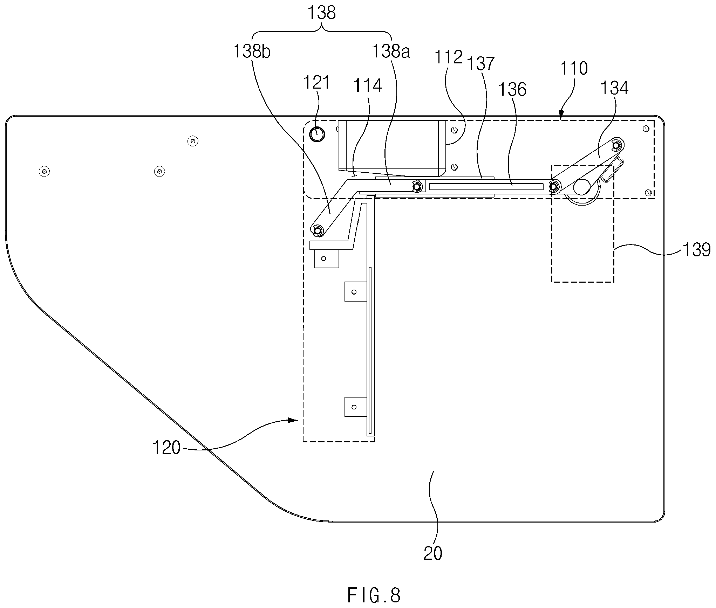

With reference to FIGS. 1 to 9, a door armrest 100 for a vehicle according to an embodiment of the present disclosure includes a first armrest part 110 provided on an inner surface of a door 20 of a vehicle 10, and a second armrest part 120 configured to be selectively movable from a first position at which the second armrest part 120 is deployed in a longitudinal direction of the first armrest part 110 to a second position at which the second armrest part 120 is folded with respect to the first armrest part 110.

For reference, the door armrest 100 for a vehicle according to the embodiment of the present disclosure may be provided on the inner surface of the door 20 of the vehicle 10 (e.g., a passenger vehicle or a commercial vehicle) in order to support an arm of an occupant P or accommodate an object. The present disclosure is not restricted or limited by the type and structure of the vehicle 10 to which the door armrest 100 is applied.

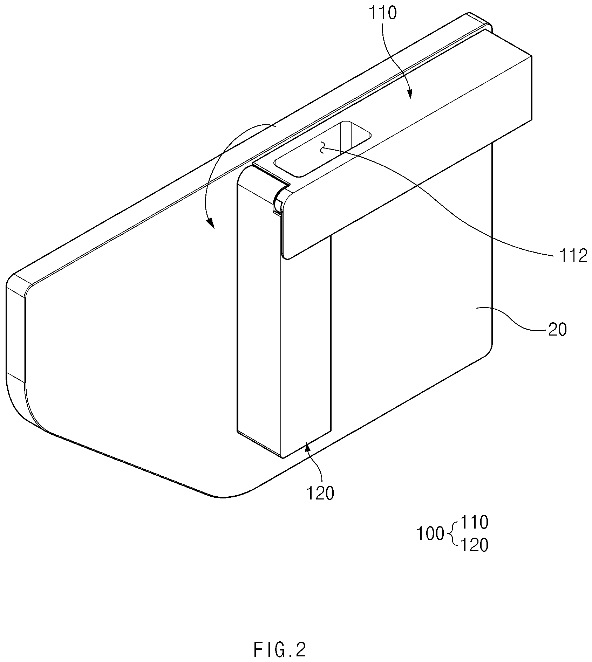

With reference to FIGS. 1 and 2, the first armrest part 110 protrudes from the inner surface of the door 20 and is configured to define a first seating surface on which the arm of the occupant P is seated (or the object is loaded).

The first armrest part 110 may have various structures capable of defining the first seating surface. The present disclosure is not restricted or limited by the structure and shape of the first armrest part 110.

For example, the first armrest part 110 may be provided in a horizontal direction (a longitudinal direction of the vehicle 10) so as to have an approximately quadrangular box shape. According to another embodiment of the present disclosure, the first armrest part 110 may be provided in a streamlined box shape or other shapes. Alternatively, the first seating surface of the first armrest part 110 may be inclined toward the occupant P at a predetermined degree with respect to the ground surface.

In addition, various types of accessory devices, such as switches for manipulating a window, a side mirror, and the like, may be provided on an upper surface of the first armrest part 110. The present disclosure is not restricted or limited by the types of accessory devices and the number of accessory devices.

According to the exemplary embodiment of the present disclosure, the first armrest part 110 may have a handle part 112 used to pull the door 20 toward the vehicle 10 (vehicle body) to close the opened door 20.

The handle part 112 may have various structures capable of being used to pull the door 20. The present disclosure is not restricted or limited by the structure and shape of the handle part 112. For example, the handle part 112 may be recessed from the upper surface of the first armrest part 110 while having an approximately quadrangular groove shape opened at the upper side thereof.

With reference to FIGS. 1 and 2, the second armrest part 120 protrudes from the inner surface of the door 20 and is configured to define a second seating surface on which the arm of the occupant P is seated (or the object is loaded).

For example, the first armrest part 110 and the second armrest part 120 may collectively support the arm of the occupant P. In this case, the configuration in which the first armrest part 110 and the second armrest part 120 collectively support the arm of the occupant P may be understood as a configuration in which a part of the arm of the occupant P is seated on the first seating surface of the first armrest part 110, and another part of the arm of the occupant P is seated on the second seating surface of the second armrest part 120.

The second armrest part 120 may have various structures capable of defining the second seating surface. The present disclosure is not restricted or limited by the structure and shape of the second armrest part 120.

For example, the second armrest part 120 may have an approximately quadrangular box shape. According to another embodiment of the present disclosure, the second armrest part 120 may be provided in a streamlined box shape or other shapes. Alternatively, the second seating surface of the second armrest part 120 may be inclined toward the occupant P at a predetermined degree with respect to the ground surface.

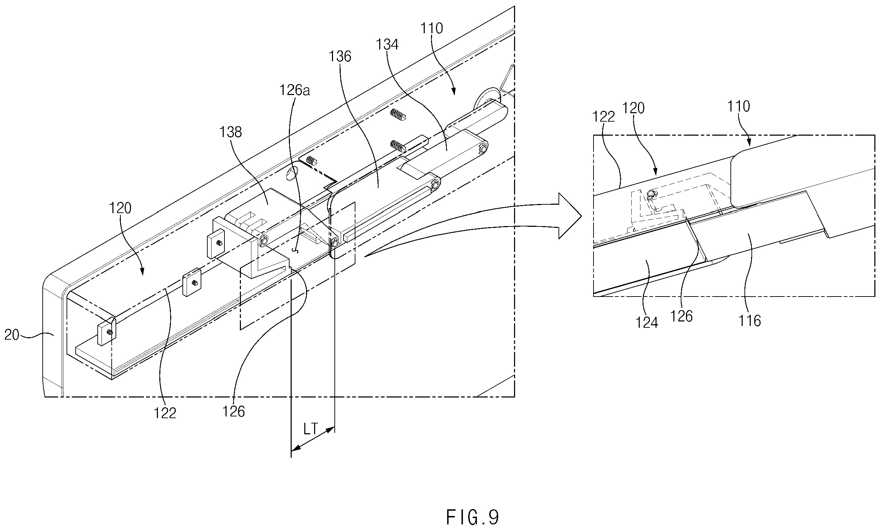

With reference to FIG. 9, according to the exemplary embodiment of the present disclosure, the second armrest part 120 may include an upper cover 122 configured to define an upper surface and a lateral surface of the second armrest part 120, a lower cover 124 configured to define a bottom surface of the second armrest part 120, and a through-portion 126 provided at one end of the lower cover 124 adjacent to the first armrest part 110 and configured to define a through-space 126a to allow a rotation of a third rotary link member 138 relative to the second armrest part 120.

For example, the upper cover 122 may have an approximately quadrangular box shape opened at the lower side thereof. The lower cover 124 may be configured to partially cover the lower side of the upper cover 122.

The through-portion 126 may be defined to have a length LT that may allow the rotation of the third rotary link member 138 relative to the second armrest part 120. The length LT of the through-portion 126 may be variously changed depending on the structure and size of the third rotary link member 138.

The second armrest part 120 may be variously changed in size in accordance with required conditions and design specifications. The present disclosure is not restricted or limited by the size of the second armrest part 120.

According to the exemplary embodiment of the present disclosure, a width of the second armrest part 120 (a width in a thickness direction of the door) may be defined as 100 mm, and a length L of the second armrest part 120 (a length in the longitudinal direction of the vehicle) may be defined as 400 mm or more.

The second armrest part 120 is configured to be selectively movable from the first position at which the second armrest part 120 is deployed in the longitudinal direction of the first armrest part 110 to the second position at which the second armrest part 120 is folded with respect to the first armrest part 110.

In this case, the configuration in which the second armrest part 120 moves from the first position to the second position is defined as including both a configuration in which the second armrest part 120 rotates from the first position to the second position and a configuration in which the second armrest part 120 moves along a curved line from the first position to the second position.

According to the exemplary embodiment of the present disclosure, the second armrest part 120 may be configured to be rotatable from the first position to the second position based on one end thereof.

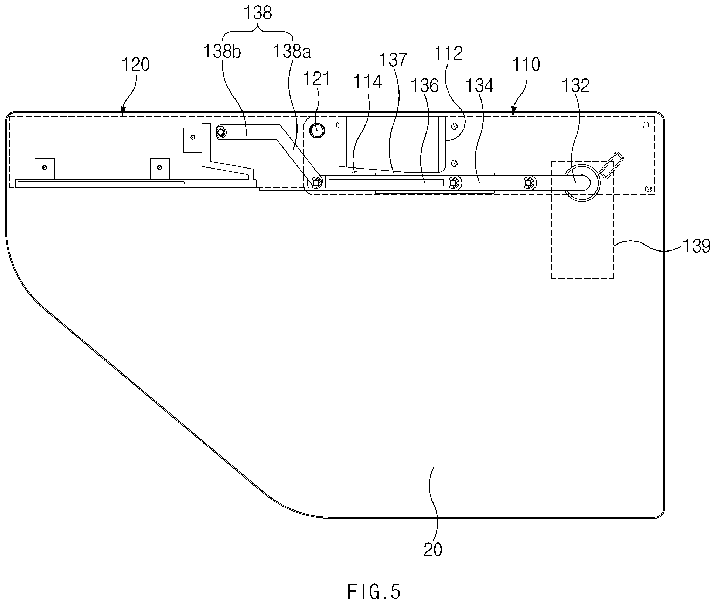

For example, the door armrest 100 for a vehicle may include a rotary shaft 121 provided at one end (a right end based on FIG. 5) of the second armrest part 120 adjacent to the first armrest part 110 and configured to support the second armrest part 120 so that the second armrest part 120 is rotatable relative to the door 20. The second armrest part 120 may rotate about the rotary shaft 121 from the first position to the second position.

The first and second positions of the second armrest part 120 may be variously defined in accordance with required conditions and design specifications.

According to the exemplary embodiment of the present disclosure, the second armrest part 120 may be disposed in a horizontal direction at the first position and disposed in a vertical direction at the second position so as to be orthogonal to the first armrest part.

More specifically, with reference to FIG. 1, the second armrest part 120 may be deployed to define a straight line together with the first armrest part 110 in the longitudinal direction of the first armrest part 110 (in the horizontal direction in the longitudinal direction of the vehicle) at the first position.

In contrast, with reference to FIG. 2, the second armrest part 120 may be disposed in the vertical direction so as to be folded at 90 degrees with respect to the first armrest part at the second position.

As described above, in the embodiment of the present disclosure, the second armrest part 120 moves from the first position at which the second armrest part 120 is deployed in the longitudinal direction of the first armrest part 110 to the second position at the second armrest part 120 is folded with respect to the first armrest part 110. Therefore, it is possible to obtain an advantageous effect of improving convenience and safety of the occupant P getting in or out of the vehicle and minimizing damage to the vehicle 10.

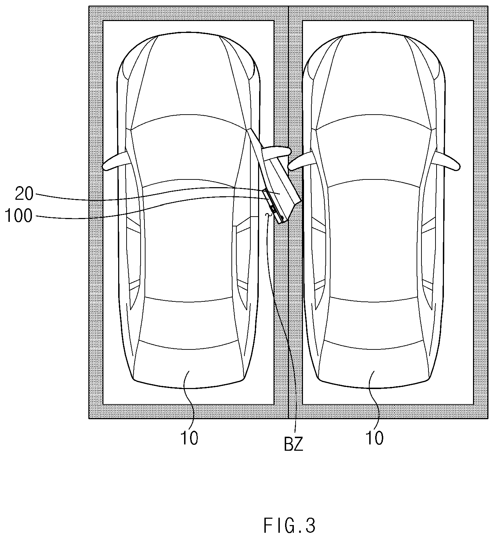

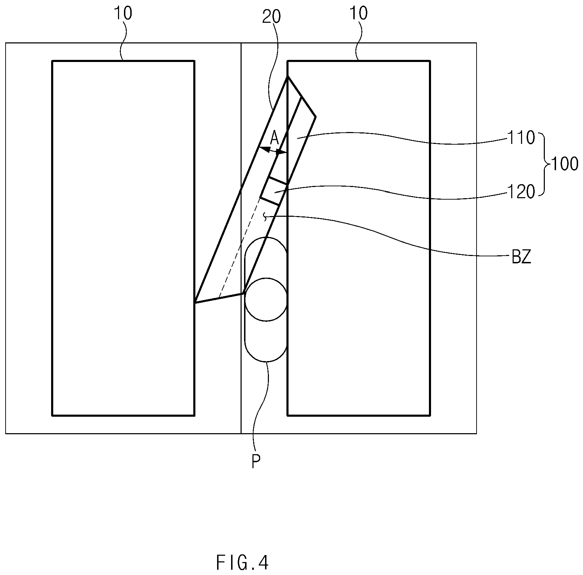

In particular, as illustrated in FIGS. 3 and 4, in a situation in which the door 20 is inevitably opened at a small opening angle A (e.g., 23 degrees) because the vehicle 10 is parked in a narrow parking space, the second armrest part 120 moves to the second position at which the second armrest part 120 is folded with respect to the first armrest part 110, such that a sufficient space BZ (an interval between the vehicle and the opened door), through which the occupant gets in or out of the vehicle, may be ensured between the vehicle 10 and the opened door 20 (a space corresponding to the width of the second armrest part may be additionally ensured). Therefore, it is possible to obtain an advantageous effect of improving convenience and safety of the occupant P getting in or out of the vehicle and minimizing damage, such as a door ding (dooring), to another neighboring vehicle 10 (or structure).

The movement of the second armrest part 120 relative to the first armrest part 110 may be implemented in various ways in accordance with required conditions and design specifications. The present disclosure is not restricted or limited by the movement structure of the second armrest part 120 relative to the first armrest part 110.

According to the exemplary embodiment of the present disclosure, the door armrest 100 for a vehicle may include a link assembly 130 configured to structurally connect the first armrest part 110 and the second armrest part 120 so that the second armrest part 120 is selectively rotatable relative to the first armrest part 110.

The link assembly 130 may have various structures capable of connecting the second armrest part 120 to the first armrest part 110 so that the second armrest part 120 is rotatable relative to the first armrest part 110. The present disclosure is not restricted or limited by the structure of the link assembly 130.

According to the exemplary embodiment of the present disclosure, the link assembly 130 may include a first rotary link member 132 provided on the first armrest part 110 and configured to be rotatable about one end thereof, a second rotary link member 134 rotatably connected to the other end of the first rotary link member 132, a slide link member 136 provided on the first armrest part 110 and configured to be slidable in the longitudinal direction of the first armrest part 110, the slide link member 136 being configured such that the second rotary link member 134 is rotatably connected to the slide link member 136, and the third rotary link member 138 having one end rotatably connected to the slide link member 136, and the other end rotatably connected to the second armrest part 120.

The first rotary link member 132, the second rotary link member 134, the slide link member 136, and the third rotary link member 138 may have various structures in accordance with required conditions and design specifications. The present disclosure is not restricted or limited by the structures and shapes of the first rotary link member 132, the second rotary link member 134, the slide link member 136, and the third rotary link member 138.

For example, the first rotary link member 132 may have an approximately straight bar shape and be provided on the first armrest part 110 and configured to be rotatable about one end thereof (a right end based on FIG. 5).

The second rotary link member 134 may have an approximately straight bar shape. One end (a right end based on FIG. 5) of the second rotary link member 134 may be rotatably connected to the other end (a left end based on FIG. 5) of the first rotary link member 132, and the other end (a left end based on FIG. 5) of the second rotary link member 134 may be rotatably connected to the slide link member 136.

The slide link member 136 may have an approximately straight bar shape and be slidably provided on the first armrest part 110 in the longitudinal direction (horizontal direction) of the first armrest part 110. One end (a right end based on FIG. 5) of the slide link member 136 may be rotatably connected to the second rotary link member 134, and the other end (a left end based on FIG. 5) of the slide link member 136 may be rotatably connected to the third rotary link member 138.

The third rotary link member 138 may include a base link portion 138a rotatably connected to the slide link member 136, and a movable link portion 138b bent from and connected to an end of the base link portion 138a and rotatably connected to the second armrest part 120. For example, the base link portion 138a and the movable link portion 138b may be provided to collectively define an approximate "V" shape.

In particular, one end of the movable link portion 138b may be rotatably connected to the second armrest part 120 and spaced apart (in a leftward direction based on FIG. 5) from a vertical reference line passing through a center of the rotary shaft 121.

According to the exemplary embodiment of the present disclosure, the door armrest 100 for a vehicle may include a slide guide 137 provided on the first armrest part 110 and configured to support the slide link member 136 so that the slide link member 136 is slidable.

The slide guide 137 may have various structures capable of supporting the slide link member 136 so that the slide link member 136 is slidable. The present disclosure is not restricted or limited by the structure of the slide guide 137.

For example, guide rails (not illustrated) may be provided on two opposite surfaces of the slide link member 136. Guide grooves (not illustrated) may be provided in the slide guide 137, and the guide rails may be slidably accommodated in the guide grooves.

As described above, in the embodiment of the present disclosure, the slide link member 136 slides along the slide guide 137. Therefore, it is possible to obtain an advantageous effect of minimizing an erroneous operation and withdrawal of the slide link member 136 and improving stability and reliability.

According to the exemplary embodiment of the present disclosure, the door armrest 100 for a vehicle may include a drive part 139 connected to one end of the first rotary link member 132 and configured to provide driving power for rotating the first rotary link member 132.

Various drive means capable of providing driving power for rotating the first rotary link member 132 may be used as the drive part 139. The present disclosure is not restricted or limited by the type and structure of the drive part 139. For example, a typical motor may be used as the drive part 139.

A time point at which the first rotary link member 132 is rotated by the drive part 139 may be variously changed in accordance with required conditions and design specifications. For example, the drive part 139 may be configured to operate to rotate the first rotary link member 132 (so that the second armrest part moves to the second position) when the door 20 of the vehicle 10 is detected as being opened.

According to another embodiment of the present disclosure, the drive part may be configured to be operated by a user's manual manipulation and to move the second armrest part from the first position to the second position (or from the second position to the first position).

Alternatively, an opening angle of the door (or a lateral space of the vehicle) may be detected, and the drive part may be configured to selectively operate on the basis of a detected signal. For example, the drive part may be configured to operate (to move the second armrest part to the second position) only in case that the opening angle of the door is equal to or smaller than a preset reference angle or the lateral space of the vehicle has a distance equal to or shorter than a preset reference distance. The operation of the drive part may be stopped when the opening angle of the door is larger than the reference angle or the lateral space of the vehicle has a distance longer than the reference distance.

With reference to FIG. 5, the second armrest part may be disposed to be deployed in the longitudinal direction (horizontal direction) of the first armrest part 110 at the first position, and the first armrest part 110 and the second armrest part 120 may collectively support the occupant's arm.

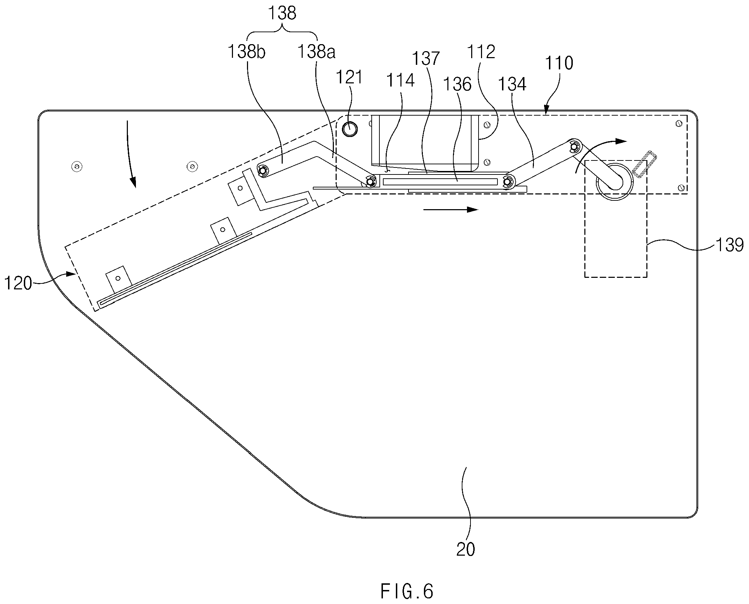

In contrast, with reference to FIGS. 6 to 8, when the first rotary link member 132 is rotated (clockwise) by the driving power of the drive part 139, the second rotary link member 134, the slide link member 136, and the third rotary link member 138, which are mechanically connected to the first rotary link member 132, operate sequentially in conjunction with one another, such that the second armrest part 120 may rotate to the second position.

More specifically, when the first rotary link member 132 rotates clockwise, the second rotary link member 134 connected to the first rotary link member 132 rotates, and at the same time, the slide link member 136 slides while being pulled in a direction (a rightward direction based on FIG. 6) in which the slide link member 136 approaches the first rotary link member 132.

When the third rotary link member 138, together with the slide link member 136, is moved rectilinearly in the rightward direction and simultaneously rotated by the sliding movement of the slide link member 136 (the slidable movement in the rightward direction based on FIG. 6), the third rotary link member 138 pulls the second armrest part 120 in the downward direction and rotates the second armrest part 120 counterclockwise about the rotary shaft 121, such that the second armrest part 120 may be disposed in the vertical direction orthogonal to the first armrest part (disposed at the second position).

On the contrary, when the first rotary link member 132 is rotated in a reverse direction (rotated counterclockwise) by the driving power of the drive part 139 in the state in which the second armrest part 120 is disposed at the second position, the second rotary link member 134 connected to the first rotary link member 132 rotates, and at the same time, the slide link member 136 slides while being pushed in a direction (the leftward direction based on FIG. 6) in which the slide link member 136 moves away from the first rotary link member 132.

When the third rotary link member 138, together with the slide link member 136, is moved rectilinearly in the leftward direction and simultaneously rotated by the sliding movement of the slide link member 136 (the slidable movement in the leftward direction based on FIG. 6), the third rotary link member 138 moves the second armrest part 120 in the upward direction and rotates the second armrest part 120 clockwise about the rotary shaft 121, such that the second armrest part 120 may be disposed again at the first position at which the second armrest part 120 is deployed in the longitudinal direction (horizontal direction) of the first armrest part 110.

According to the exemplary embodiment of the present disclosure, when the second armrest part 120 moves to the first position, the first rotary link member 132 and the second rotary link member 134 may be disposed in a row in the longitudinal direction of the slide link member 136.

As described above, in the embodiment of the present disclosure, the first rotary link member 132 and the second rotary link member 134 are disposed in a row in the longitudinal direction of the slide link member 136 when the second armrest part 120 moves to the first position. Therefore, it is possible to obtain an advantageous effect of minimizing a degree to which the second armrest part 120 is inadvertently rotated by pressure applied to the second armrest part 120 (e.g., a load applied by the occupant's arm) in the state in which the second armrest part 120 is disposed at the first position.

According to the exemplary embodiment of the present disclosure, the door armrest 100 for a vehicle may include a sliding space 114 defined between the handle part 112 and a bottom surface of the first armrest part 110, and the slide link member 136 may be configured to be slidable along the sliding space 114.

As described above, in the embodiment of the present disclosure, the sliding space 114 is provided between the handle part 112 and the bottom surface of the first armrest part 110, and the slide link member 136 slides along the sliding space 114. Therefore, it is possible to obtain an advantageous effect of more stably maintaining an arrangement state of the slide link member 136 and preventing interference (contact) between the handle part 112 and the link assembly 130.

In addition, according to the exemplary embodiment of the present disclosure, the base link portion 138a may be configured to be disposed in the longitudinal direction of the slide link member 136 when the second armrest part 120 moves to the second position.

As described above, in the embodiment of the present disclosure, the base link portion 138a is disposed in the longitudinal direction of the slide link member 136 when the second armrest part 120 moves to the second position. Therefore, it is possible to obtain an advantageous effect of minimizing a degree to which the second armrest part 120 is inadvertently rotated by pressure applied to the second armrest part 120 (e.g., pressure applied by contact of the occupant) in the state in which the second armrest part 120 is disposed at the second position.

Meanwhile, in the embodiment of the present disclosure illustrated and described above, the example has been described in which the second armrest part 120 rotates relative to the first armrest part 110 by means of the link assembly 130 that structurally connects the first armrest part 110 and the second armrest part 120. However, according to another embodiment of the present disclosure, it is possible to rotate the second armrest part relative to the first armrest part by structurally separating the first armrest part and the second armrest part, detaching the second armrest part from the door, and then mounting the second armrest part to the door again.

With reference to FIG. 9, according to the exemplary embodiment of the present disclosure, the door armrest 100 for a vehicle may include an extension cover 116 provided at an end of the first armrest part 110 adjacent to the second armrest part 120 and disposed to cover the through-portion 126 when the second armrest part 120 moves to the first position.

This is based on the fact that the through-portion 126 is provided in the lower portion of the second armrest part 120 to allow the rotation of the third rotary link member 138 relative to the second armrest part 120, such that foreign substances such as dust may be introduced into the second armrest part 120 through the through-portion 126, and the internal components of the second armrest part 120 are exposed to the outside in an intact manner, which may degrade the design properties.

In contrast, in the embodiment of the present disclosure, the extension cover 116 is provided at the end of the first armrest part 110 adjacent to the second armrest part 120, and the extension cover 116 covers the through-portion 126 when the second armrest part 120 moves to the first position. Therefore, it is possible to obtain an advantageous effect of minimizing a degree to which foreign substances, such as dust, are introduced into the second armrest part 120 through the through-portion 126 and preventing the internal components of the second armrest part 120 from being exposed to the outside in an intact manner.

In particular, the extension cover 116 may be defined to have the length LT corresponding to the through-portion 126. Alternatively, the extension cover 116 may be configured to have a shorter length than the through-portion 126.

According to the embodiment of the present disclosure described above, it is possible to obtain an advantageous effect of improving the convenience and safety of the occupant getting in or out of the vehicle and minimizing damage to the vehicle.

In particular, according to the embodiment of the present disclosure, it is possible to ensure a sufficient space for allowing the occupant to get in or out of a vehicle parked in a narrow parking space, and improve the convenience and safety of the occupant getting in or out of the vehicle.

In addition, according to the embodiment of the present disclosure, it is possible to obtain an advantageous effect of sufficiently performing the natural function of the door armrest and improving the structural stability and reliability.

In addition, according to the embodiment of the present disclosure, it is possible to obtain an advantageous effect of ensuring the convenience and safety of the occupant getting in or out of the vehicle, minimizing deterioration in design features and merchandise value, and achieving the aesthetic external appearance.

While the embodiments have been described above, the embodiments are just illustrative and not intended to limit the present disclosure. It can be appreciated by those skilled in the art that various modifications and applications, which are not described above, may be made to the present embodiment without departing from the intrinsic features of the present embodiment. For example, the respective constituent elements specifically described in the embodiments may be modified and then carried out. Further, it should be interpreted that the differences related to the modifications and applications are included in the scope of the present disclosure defined by the appended claims.

## Claims

1. A door armrest for a vehicle, the door armrest comprising:
a first armrest part provided on an inner surface of a door for a vehicle; and
a second armrest part selectively movable between a first position at which the second armrest part is deployed along a longitudinal direction of the first armrest part to a second position at which the second armrest part is folded with respect to the first armrest part.

2. The door armrest of claim 1, wherein the second armrest part is rotatable between the first position to the second position.

3. The door armrest of claim 1 or 2, comprising:
a rotary shaft provided at one end of the second armrest part adjacent to the first armrest part and coupled to the second armrest part such that the second armrest part is rotatable relative to the door between the first position and the second position.

4. The door armrest of any one of claims 1 to 3, wherein, in the first position the second armrest part is disposed in a horizontal direction, and wherein in the second position the second armrest is disposed in a vertical direction so as to be substantially orthogonal to the first armrest part.

5. The door armrest of any one of claims 1 to 4, comprising:
a link assembly connecting the second armrest part to the first armrest part so that the second armrest part is selectively rotatable relative to the first armrest part.

6. The door armrest of claim 5, wherein the link assembly comprises:
a first rotary link member provided on the first armrest part and rotatably connected to the first armrest part at one end thereof;
a second rotary link member rotatably connected to the other end of the first rotary link member;
a slide link member provided on the first armrest part and slidable in the longitudinal direction of the first armrest part, the second rotary link member being rotatably connected to the slide link member; and
a third rotary link member having one end rotatably connected to the slide link member, and the other end rotatably connected to the second armrest part.

7. The door armrest of claim 6, comprising:
a slide guide provided on the first armrest part and supporting the slide link member such that the slide link member is slidable.

8. The door armrest of claim 6 or 7, wherein the first rotary link member and the second rotary link member are disposed in a row in the longitudinal direction of the first armrest part when the second armrest part moves to the first position.

9. The door armrest of any one of claims 6 to 8, wherein the third rotary link member comprises:
a base link portion rotatably connected to the slide link member; and
a movable link portion bent from and connected to an end of the base link portion and rotatably connected to the second armrest part, and
wherein the base link portion is disposed in a longitudinal direction of the slide link member when the second armrest part moves to the second position.

10. The door armrest of any one of claims 6 to 9, comprising:
a drive part connected to one end of the first rotary link member and configured to provide driving power for rotating the first rotary link member.

11. The door armrest of any one of claims 6 to 10, comprising:
a handle part provided on the first armrest part.

12. The door armrest of claim 11, wherein the handle part and a bottom surface of the first armrest part are offset from one another and define a sliding space therebetween within which the slide link member is positioned.

13. The door armrest of any one of claims 1 to 12, wherein the second armrest part has a length of 400 mm or more.

14. The door armrest of claim 6, wherein the second armrest part comprises:
an upper cover defining an upper surface and a lateral surface of the second armrest part;
a lower cover defining a bottom surface of the second armrest part; and
a through-portion provided at one end of the lower cover adjacent to the first armrest part and defining a through-space that allows a rotation of the third rotary link member relative to the second armrest part.

15. The door armrest of claim 14, comprising:
an extension cover provided at an end of the first armrest part adjacent to the second armrest part and covering the through-portion when the second armrest part moves to the first position.
